# EUROPEAN PATENT SPECIFICATION

(11) **EP 4 303 950 B1**
(45) Date of publication and mention of the grant of the patent: **25.11.2026**
(21) Application number: 21929197.8
(22) Date of filing: 03.12.2021
(51) Int. Cl.: H01M 4/13, H01M 4/62, H01B 1/06, H01M 10/0562, H01M 10/052, H01M 10/0525

(54) **SOLID ELECTROLYTE MATERIAL AND BATTERY USING SAME**
FESTELEKTROLYTMATERIAL UND BATTERIE DAMIT
MATÉRIAU D'ÉLECTROLYTE SOLIDE ET BATTERIE L'UTILISANT

(30) Priority: 02.03.2021 JP 2021033002
(43) Date of publication of application: 10.01.2024
(73) Proprietor: Panasonic Intellectual Property Management Co., Ltd., Kadoma-shi, Osaka 571-0057 (JP)
(72) Inventor: MIYATAKE, Kazufumi, Tokyo 103-0022 (JP); NISHIO, Yusuke, Tokyo 103-0022 (JP); KUBO, Takashi, Tokyo 103-0022 (JP); ASANO, Tetsuya, Tokyo 103-0022 (JP); SAKAI, Akihiro, Tokyo 103-0022 (JP)
(74) Representative: Grünecker Patent- und Rechtsanwälte PartG mbB
(86) International application number: PCT/JP2021/044439
(87) International publication number: WO 2022/185639

(56) References cited:
- WO-A1-2020/137392
- WO-A1-2021/002053
- WO-A1-2021/002053

## Description

### Technical Field

The present disclosure relates to a solid electrolyte material and a battery using the material.

### Background Art

PTL 1 discloses an all-solid-state battery using a sulfide solid electrolyte. PTL 2 discloses a solid electrolyte material represented by Li_{6-3z}Y_{z}X₆ (0 < z < 2 is satisfied, and X is Cl or Br). Further examples of halide solid electrolytes are disclosed in PTL 3 and PTL 4.

### Citation List

### Patent Literature

PTL 1: JP 2011-129312 A
PTL 2: WO 2018/025582 A1
PTL 3: WO 2020/137392 Al
PTL 4: WO 2021/002053 Al

### Summary of Invention

### Technical Problem

It is an object of the present disclosure to provide a new solid electrolyte material with high utility.

### Solution to Problem

The solid electrolyte material of the present disclosure includes Li, Zr, Y, Cl, O, and H; wherein the molar ratio of O to Y is greater than or equal to 0.07 and less than or equal to 0.17; and wherein a molar ratio of Li to Y is greater than or equal to 4.96 and less than or equal to 5.00, a molar ratio of Zr to Y is greater than or equal to 0.93 and less than or equal to 0.94, and a molar ratio of Cl to Y is greater than or equal to 11.22 and less than or equal to 11.35.

### Advantageous Effects of Invention

The present disclosure provides a new solid electrolyte material with high utility.

### Brief Description of Drawings

[Fig. 1] Fig. 1 shows a cross-sectional view of a battery 1000 according to a second embodiment.
[Fig. 2] Fig. 2 is a graph showing X-ray diffraction patterns of solid electrolyte materials according to Examples 1 and 2 and Reference Examples 1 and 2.
[Fig. 3] Fig. 3 is a schematic view of a compression molding dies 300 used for evaluating the ion conductivity of a solid electrolyte material.
[Fig. 4] Fig. 4 is a graph showing a cole-cole plot obtained by impedance measurement of the solid electrolyte material according to Example 1.
[Fig. 5] Fig. 5 is a graph showing the infrared absorption spectra of the solid electrolyte materials according to Examples 1 and 2 and Reference Examples 1 and 2.
[Fig. 6] Fig. 6 is a graph showing the results of thermal analysis of solid electrolyte materials according to Examples 1 and 2 and Reference Examples 1 and 2.
[Fig. 7] Fig. 7 is a graph showing the initial discharge characteristics of batteries according to Example 1 and Reference Example 2.

### Description of Embodiments

Embodiments of the present disclosure will now be described with reference to the drawings.

### (First embodiment)

A solid electrolyte material according to a first embodiment includes Li, Zr, Y, Cl, O, and H; wherein the molar ratio of O to Y is greater than or equal to 0.07 and less than or equal to 0.17; and wherein a molar ratio of Li to Y is greater than or equal to 4.96 and less than or equal to 5.00, a molar ratio of Zr to Y is greater than or equal to 0.93 and less than or equal to 0.94, and a molar ratio of Cl to Y is greater than or equal to 11.22 and less than or equal to 11.35.

The solid electrolyte material according to the first embodiment is a new solid electrolyte material with high utility. The solid electrolyte material according to the first embodiment can have, for example, practical lithium ion conductivity and thermal resistance such as a high lithium ion conductivity and a high thermal resistance. Here, a high lithium ion conductivity is, for example, greater than or equal to 3 × 10⁻⁴ S/cm. That is, the solid electrolyte material according to the first embodiment can have an ion conductivity of, for example, greater than or equal to 3 × 10⁻⁴ S/cm. The phrase "solid electrolyte material according to the first embodiment has a high thermal resistance" means that the solid electrolyte material according to the first embodiment has, for example, a high melting point. Here, the high melting point is, for example, greater than or equal to 478°C. When the solid electrolyte material is a multiphase material, the melting point of the solid electrolyte material means the highest temperature among the melting points of the solid electrolyte material.

The solid electrolyte material according to the first embodiment can be used for obtaining an all-solid-state battery excellent in charge and discharge characteristics. The all-solid-state battery may be a primary battery or may be a secondary battery.

Desirably, the solid electrolyte material according to the first embodiment is substantially free of sulfur. The fact that the solid electrolyte material according to the first embodiment does not substantially contain sulfur means that the solid electrolyte material does not contain sulfur as a constituent element, except for sulfur inevitably mixed as an impurity. In this case, the amount of the sulfur mixed as an impurity in the solid electrolyte material is, for example, less than or equal to 1 mol%. From the viewpoint of safety, the solid electrolyte material according to the first embodiment desirably does not contain sulfur. A solid electrolyte material not containing sulfur does not generate hydrogen sulfide, even if it is exposed to the atmosphere, and is therefore excellent in safety. The sulfide solid electrolyte disclosed in PTL 1 may generate hydrogen sulfide when exposed to the atmosphere.

The solid electrolyte material according to the first embodiment may consist essentially of Li, Zr, Y, Cl, O, and H. The phrase "the solid electrolyte material according to the first embodiment consists essentially of Li, Zr, Y, Cl, O, and H " means that the proportion (i.e., molar fraction) of the total amount of substance of Li, Zr, Y, Cl, O, and H to the total amount of substance of all elements constituting the solid electrolyte material in the solid electrolyte material according to the first embodiment is greater than or equal to 90%. As an example, the proportion may be greater than or equal to 95%. The solid electrolyte material according to the first embodiment may consist of Li, Zr, Y, Cl, O, and H only.

In order to enhance the ion conductivity of the solid electrolyte material, the molar ratio of O to Y in the solid electrolyte material according to the first embodiment is greater than or equal to 0.07 and less than or equal to 0.17.

In order to enhance the ion conductivity of the solid electrolyte material, the solid electrolyte material according to the first embodiment may further contain at least one selected from the group consisting of Mg, Ca, Zn, Sr, Ba, Al, Sc, Ga, Bi, La, Sm, Hf, Ta, and Nb.

In order to enhance the ion conductivity of the solid electrolyte material, O binding to hydrogen may be present in a surface region of the solid electrolyte material according to the first embodiment.

Here, the surface region of the solid electrolyte material according to the first embodiment means a region of about 1 µm deep from the surface of the solid electrolyte material to the inner direction.

The X-ray diffraction pattern of the solid electrolyte material according to the first embodiment can be obtained using Cu-Kα. The obtained X-ray diffraction pattern may have a peak within each of the diffraction angle 2θ ranges of greater than or equal to 15.5° and less than or equal to 15.7°, greater than or equal to 16.6° and less than or equal to 16.8°, greater than or equal to 17.4° and less than or equal to 17.6°, greater than or equal to 20.1° and less than or equal to 20.3°, greater than or equal to 31.4° and less than or equal to 31.6°, greater than or equal to 35.6° and less than or equal to 35.8°, greater than or equal to 47.0° and less than or equal to 47.2°, and greater than or equal to 49.0° and less than or equal to 49.2°.

A diffraction peak in an X-ray diffraction pattern is also simply referred to as a "peak".

The X-ray diffraction pattern of the solid electrolyte material according to the first embodiment can be obtained by X-ray diffraction measurement by a θ-2θ method using Cu-Kα rays (wavelengths of 1.5405 angstrom and 1.5444 angstrom, i.e., wavelengths of 0.15405 nm and 0.15444 nm).

The angle of a peak is an angle indicating the maximum intensity of a mountain-like portion having an SN ratio of greater than or equal to 3 and a half-width of less than or equal to 10°. The half-width is the width that is represented by the difference between two diffraction angles at which the intensity is half the maximum peak intensity I_{MAX}. The SN ratio is the ratio of a signal S to a background noise N.

The molar ratio of Li to Y is calculated by a mathematical expression: (amount of substance of Li)/(amount of substance of Y). The molar ratio of Zr to Y is calculated by a mathematical expression: (amount of substance of Zr)/(amount of substance of Y). The molar ratio of Cl to Y is calculated by a mathematical expression: (amount of substance of Cl)/(amount of substance of Y). Hereinafter, the molar ratio of Li to Y may be written as "molar ratio x". The molar ratio of Zr to Y may be written as "molar ratio y". The molar ratio of Cl to Y may be written as "molar ratio z".

In order to further enhance the ion conductivity of the solid electrolyte material, the molar ratio x is greater than or equal to 4.96 and less than or equal to 5.00, the molar ratio y is greater than or equal to 0.93 and less than or equal to 0.94, and the molar ratio z is greater than or equal to 11.22 and less than or equal to 11.35.

The shape of the solid electrolyte material according to the first embodiment is not limited. Examples of the shape are needle, spherical, and oval spherical shapes. The solid electrolyte material according to the first embodiment may be a particle. The solid electrolyte material according to the first embodiment may be formed so as to have a pellet or planar shape.

For example, when the shape of the solid electrolyte material according to the first embodiment is a particulate shape (e.g., spherical), the solid electrolyte material according to the first embodiment may have a median diameter of greater than or equal to 0.1 µm and less than or equal to 100 µm. Consequently, the solid electrolyte material according to the first embodiment and other materials such as an active material can be well dispersed. The median diameter of particles means the particle diameter (d50) at the accumulated volume 50% in a volume-based particle size distribution. The volume-based particle size distribution can be measured with a laser diffraction measurement apparatus or an image analyzer.

In order to enhance the ion conductivity of the solid electrolyte material according to the first embodiment and to well disperse the solid electrolyte material according to the first embodiment and an active material, the median diameter may be greater than or equal to 0.5 µm and less than or equal to 10 µm.

In order to better disperse the solid electrolyte material according to the first embodiment and an active material, the solid electrolyte material according to the first embodiment may have a median diameter smaller than that of the active material.

### <Method for manufacturing solid electrolyte material>

The solid electrolyte material according to the first embodiment can be manufactured by the following method.

First, raw material powders of halides are provided so as to give a target composition and are mixed.

As an example, when a solid electrolyte material consisting of Li, Zr, Y, Cl, O, and H is synthesized, a YCl₃ raw material powder, a LiCl raw material powder, and a ZrCl₄ raw material powder are mixed. The obtained powder mixture is heat-treated in an inert gas atmosphere (e.g., an argon atmosphere having a dew point of less than or equal to -60°C) having adjusted oxygen concentration and moisture concentration. The heat treatment temperature may be within a range of, for example, greater than or equal to 200°C and less than or equal to 650°C.

The obtained reaction product is left to stand in an atmosphere having a relatively high dew point (e.g., an argon atmosphere having a dew point of -30°C).

The raw material powders may be mixed at a molar ratio adjusted in advance so as to offset a composition change that may occur in the synthesis process. The oxygen amount in a solid electrolyte material is determined by selecting the raw material powders, the oxygen concentration in the atmosphere, the moisture concentration in the atmosphere, and the reaction time. A desired solid electrolyte material is thus obtained.

It is inferred that the oxygen and hydrogen included in the solid electrolyte material according to the first embodiment are incorporated from the atmosphere having a relatively high dew point.

The composition of a solid electrolyte material can be determined by, for example, inductively coupled plasma emission spectroscopy, ion chromatography, or non-dispersive infrared absorbing method. For example, the compositions of Li, Zr, and Y can be determined by inductively coupled plasma emission spectroscopy, the composition of Cl can be determined by ion chromatography, and O can be measured by non-dispersive infrared absorbing method.

### (Second embodiment)

A second embodiment will now be described. The matters described in the first embodiment may be appropriately omitted.

In a second embodiment, a battery using the solid electrolyte material according to the first embodiment will be described.

The battery according to the second embodiment includes a positive electrode, a negative electrode, and an electrolyte layer. The electrolyte layer is disposed between the positive electrode and the negative electrode. At least one selected from the group consisting of the positive electrode, the electrolyte layer, and the negative electrode contains the solid electrolyte material according to the first embodiment.

The battery according to the second embodiment contains the solid electrolyte material according to the first embodiment and therefore has excellent charge and discharge characteristics.

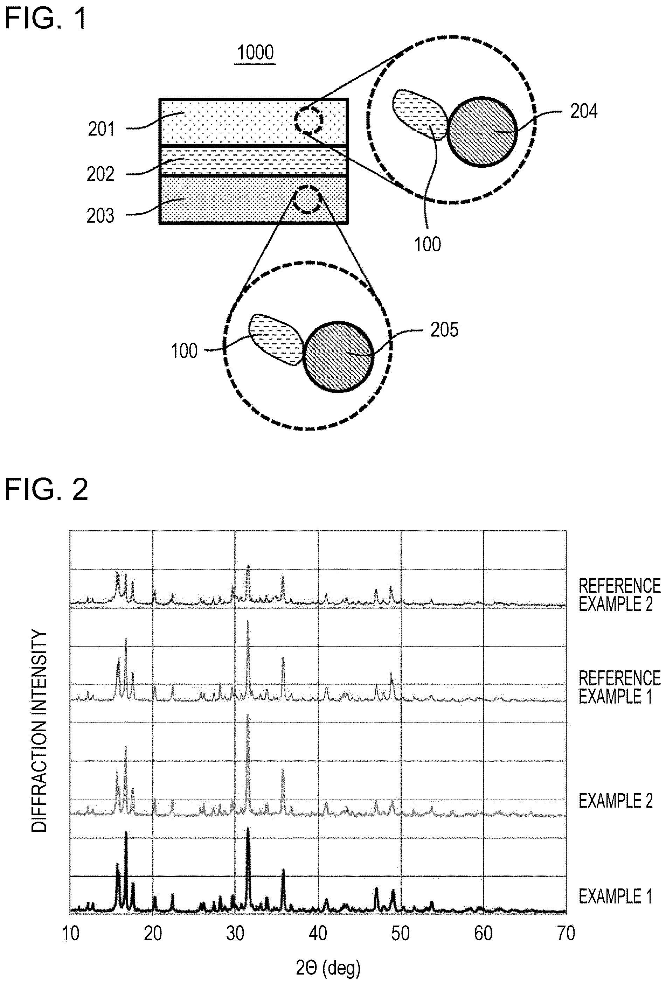

Fig. 1 is a cross-sectional view showing a schematic structure of a battery 1000 according to the second embodiment.

The battery 1000 includes a positive electrode 201, an electrolyte layer 202, and a negative electrode 203. The electrolyte layer 202 is disposed between the positive electrode 201 and the negative electrode 203.

The positive electrode 201 contains a positive electrode active material particle 204 and a solid electrolyte particle 100.

The electrolyte layer 202 contains an electrolyte material. The electrolyte material is, for example, a solid electrolyte material.

The negative electrode 203 contains a negative electrode active material particle 205 and a solid electrolyte particle 100.

The solid electrolyte particle 100 is a particle including the solid electrolyte material according to the first embodiment. The solid electrolyte particle 100 may be a particle consisting of the solid electrolyte material according to the first embodiment or a particle containing the solid electrolyte material according to the first embodiment as a main component. Here, the particle containing the solid electrolyte material according to the first embodiment as a main component means a particle in which the most abundant component in terms of molar ratio is the solid electrolyte material according to the first embodiment.

The positive electrode 201 contains a material that can occlude and release metal ions (for example, lithium ions). The positive electrode 201 contains, for example, a positive electrode active material (for example, the positive electrode active material particle 204).

Examples of the positive electrode active material are a lithium-containing transition metal oxide, a transition metal fluoride, a polyanionic material, a fluorinated polyanionic material, a transition metal sulfide, a transition metal oxyfluoride, a transition metal oxysulfide, and a transition metal oxynitride. Examples of the lithium-containing transition metal oxide are LiNi_{1-d-f}Co_{d}Al_{f}O₂ (here, 0 < d, 0 < f, and 0 < (d + f) < 1) or LiCoO₂.

In the positive electrode 201, in order to well disperse the positive electrode active material particle 204 and the solid electrolyte particle 100, the positive electrode active material particle 204 may have a median diameter of greater than or equal to 0.1 µm. The charge and discharge characteristics of the battery 1000 are improved by the good dispersion. In order to rapidly disperse lithium in the positive electrode active material particle 204, the positive electrode active material particle 204 may have a median diameter of less than or equal to 100 µm. Due to the rapid dispersion of lithium, the battery 1000 can operate at high output. As described above, the positive electrode active material particle 204 may have a median diameter of greater than or equal to 0.1 µm and less than or equal to 100 µm.

In the positive electrode 201, in order to well disperse the positive electrode active material particle 204 and the solid electrolyte particle 100, the positive electrode active material particle 204 may have a median diameter larger than that of the solid electrolyte particle 100.

In order to increase the energy density and output of the battery 1000, in the positive electrode 201, the ratio of the volume of the positive electrode active material particle 204 to the sum of the volumes of the positive electrode active material particle 204 and the solid electrolyte particle 100 may be greater than or equal to 0.30 and less than or equal to 0.95.

In order to increase the energy density and output of the battery 1000, the positive electrode 201 may have a thickness of greater than or equal to 10 µm and less than or equal to 500 µm.

The electrolyte layer 202 contains an electrolyte material. The electrolyte material may be the solid electrolyte material according to the first embodiment. The electrolyte layer 202 may be a solid electrolyte layer.

The electrolyte layer 202 may be constituted of only the solid electrolyte material according to the first embodiment. Alternatively, the electrolyte layer 202 may be constituted of only a solid electrolyte material that is different from the solid electrolyte material according to the first embodiment.

Examples of the solid electrolyte material that is different from the solid electrolyte material according to the first embodiment are Li₂MgX'₄, Li₂FeX'₄, Li(Al,Ga,In)X'₄, Li₃(Al,Ga,In)X'₆, and LiI. Here, X' is at least one selected from the group consisting of F, Cl, Br, and I.

In the present disclosure, the notation "(A,B,C)" in a chemical formula means "at least one selected from the group consisting of A, B, and C". For example, "(Al,Ga,In)" is synonymous with "at least one selected from the group consisting of Al, Ga, and In".

Hereinafter, the solid electrolyte material according to the first embodiment is called a first solid electrolyte material. The solid electrolyte material that is different from the solid electrolyte material according to the first embodiment is called a second solid electrolyte material.

The electrolyte layer 202 may contain not only the first solid electrolyte material but also the second solid electrolyte material. The first solid electrolyte material and the second solid electrolyte material may be uniformly dispersed. A layer consisting of the first solid electrolyte material and a layer consisting of the second solid electrolyte material may be stacked along the stacking direction of the battery 1000.

In order to prevent short-circuiting between the positive electrode 201 and the negative electrode 203 and to increase the output of the battery, the electrolyte layer 202 may have a thickness of greater than or equal to 1 µm and less than or equal to 100 µm.

The negative electrode 203 contains a material that can occlude and release metal ions (for example, lithium ions). The negative electrode 203 contains, for example, a negative electrode active material (for example, negative electrode active material particle 205).

Examples of the negative electrode active material are a metal material, a carbon material, an oxide, a nitride, a tin compound, and a silicon compound. The metal material may be a single metal or an alloy. Examples of the metal material are a lithium metal and a lithium alloy. Examples of the carbon material are natural graphite, coke, graphitizing carbon, carbon fibers, spherical carbon, artificial graphite, and amorphous carbon. From the viewpoint of capacity density, suitable examples of the negative electrode active material are silicon (i.e., Si), tin (i.e., Sn), a silicon compound, and a tin compound.

In the negative electrode 203, in order to well disperse the negative electrode active material particle 205 and the solid electrolyte particle 100, the negative electrode active material particle 205 may have a median diameter of greater than or equal to 0.1 µm. The charge and discharge characteristics of the battery are improved by the good dispersion. In order to rapidly disperse lithium in the negative electrode active material particle 205, the negative electrode active material particle 205 may have a median diameter of less than or equal to 100 µm. Due to the rapid dispersion of lithium, the battery can operate at high output. As described above, the negative electrode active material particle 205 may have a median diameter of greater than or equal to 0.1 µm and less than or equal to 100 µm.

In the negative electrode 203, in order to well disperse the negative electrode active material particle 205 and the solid electrolyte particle 100, the negative electrode active material particle 205 may have a median diameter larger than that of the solid electrolyte particle 100.

In order to increase the energy density and output of the battery 1000, in the negative electrode 203, the ratio of the volume of the negative electrode active material particle 205 to the sum of the volumes of the negative electrode active material particle 205 and the solid electrolyte particle 100 may be greater than or equal to 0.30 and less than or equal to 0.95.

In order to increase the energy density and output of the battery 1000, the negative electrode 203 may have a thickness of greater than or equal to 10 µm and less than or equal to 500 µm.

In order to enhance the ion conductivity, the chemical stability, and the electrochemical stability, at least one selected from the group consisting of the positive electrode 201, the electrolyte layer 202, and the negative electrode 203 may contain the second solid electrolyte material.

The second solid electrolyte material may be a halide solid electrolyte.

Examples of the halide solid electrolyte are Li₂MgX'₄, Li₂FeX'₄, Li(Al,Ga,In)X'₄, Li₃(Al,Ga,In)X'₆, and LiI. Here, X' is at least one selected from the group consisting of F, Cl, Br, and I.

The second solid electrolyte material may be a sulfide solid electrolyte.

Examples of the sulfide solid electrolyte are Li₂S-P₂S₅, Li₂S-SiS₂, Li₂S-B₂S₃, Li₂S-GeS₂, Li_{3.25}Ge_{0.25}P_{0.75}S₄, and Li₁₀GeP₂S₁₂.

The second solid electrolyte material may be an oxide solid electrolyte.

Examples of the oxide solid electrolyte are:
(i) an NASICON-type solid electrolyte, such as LiTi₂(PO₄)₃ or its element substitute;
(ii) a perovskite-type solid electrolyte, such as (LaLi)TiO₃;
(iii) an LISICON-type solid electrolyte, such as Li₁₄ZnGe₄O₁₆, Li₄SiO₄, LiGeO₄, or its element substitute;
(iv) a garnet-type solid electrolyte, such as Li₇La₃Zr₂O₁₂ or its element substitute;
   and
(v) Li₃PO₄ or its N-substitute.

The second solid electrolyte material may be an organic polymer solid electrolyte.

Examples of the organic polymer solid electrolyte are a polymer compound and a compound of a lithium salt. The polymer compound may have an ethylene oxide structure. A polymer compound having an ethylene oxide structure can contain a large amount of a lithium salt and can therefore further enhance the ion conductivity.

Examples of the lithium salt are LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), and LiC(SO₂CF₃)₃. One lithium salt selected from these salts may be used alone. Alternatively, a mixture of two or more lithium salts selected from these salts may be used.

At least one selected from the group consisting of the positive electrode 201, the electrolyte layer 202, and the negative electrode 203 may contain a nonaqueous electrolyte liquid, a gel electrolyte, or an ionic liquid for the purpose of facilitating the transfer of lithium ions and improving the output characteristics of the battery 1000.

The nonaqueous electrolyte liquid contains a nonaqueous solvent and a lithium salt dissolved in the nonaqueous solvent.

Examples of the nonaqueous solvent are a cyclic carbonate solvent, a chain carbonate solvent, a cyclic ether solvent, a chain ether solvent, a cyclic ester solvent, a chain ester solvent, and a fluorine solvent. Examples of the cyclic carbonate solvent are ethylene carbonate, propylene carbonate, and butylene carbonate. Examples of the chain carbonate solvent are dimethyl carbonate, ethyl methyl carbonate, and diethyl carbonate. Examples of the cyclic ether solvent are tetrahydrofuran, 1,4-dioxane, and 1,3-dioxolane. Examples of the chain ether solvent are 1,2-dimethoxyethane and 1,2-diethoxyethane. An example of the cyclic ester solvent is γ-butyrolactone. An example of the chain ester solvent is methyl acetate. Examples of the fluorine solvent are fluoroethylene carbonate, methyl fluoropropionate, fluorobenzene, fluoroethyl methyl carbonate, and fluorodimethylene carbonate.

One nonaqueous solvent selected from these solvents may be used alone. Alternatively, a mixture of two or more nonaqueous solvents selected from these solvents may be used.

Examples of the lithium salt are LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), and LiC(SO₂CF₃)₃. One lithium salt selected from these salts may be used alone. Alternatively, a mixture of two or more lithium salts selected from these salts may be used.

The concentration of the lithium salt is within a range of, for example, greater than or equal to 0.5 mol/L and less than or equal to 2 mol/L.

As the gel electrolyte, a polymer material impregnated with a nonaqueous electrolyte liquid can be used. Examples of the polymer material are polyethylene oxide, polyacrylonitrile, polyvinylidene fluoride, polymethyl methacrylate, and a polymer having an ethylene oxide bond.

Examples of the cation included in the ionic liquid are:
(i) an aliphatic chain quaternary salt, such as tetraalkylammonium and tetraalkylphosphonium;
(ii) an alicyclic ammonium, such as pyrrolidiniums, morpholiniums, imidazoliniums, tetrahydropyrimidiniums, piperaziniums, and piperidiniums; and
(iii) a nitrogen-containing heterocyclic aromatic cation, such as pyridiniums and imidazoliums.

Examples of the anion included in the ionic liquid are PF₆⁻, BF₄⁻, SbF₆⁻, AsF₆⁻, SO₃CF₃⁻, N(SO₂CF₃)₂⁻, N(SO₂C₂F₅)₂⁻, N(SO₂CF₃)(SO₂C₄F₉)⁻, and C(SO₂CF₃)₃⁻.

The ionic liquid may contain a lithium salt.

At least one selected from the group consisting of the positive electrode 201, the electrolyte layer 202, and the negative electrode 203 may contain a binder for the purpose of improving the adhesion between individual particles.

Examples of the binder are polyvinylidene fluoride, polytetrafluoroethylene, polyethylene, polypropylene, an aramid resin, polyamide, polyimide, polyamideimide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinylpyrrolidone, polyether, polyether sulfone, hexafluoropolypropylene, styrene butadiene rubber, and carboxymethyl cellulose. A copolymer can also be used as the binder. Examples of such the binder are copolymers of two or more materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene. A mixture of two or more selected from them may be used as the binder.

At least one selected from the positive electrode 201 and the negative electrode 203 may contain a conductive assistant for enhancing the electron conductivity.

Examples of the conductive assistant are:
(i) graphites, such as natural graphite and artificial graphite;
(ii) carbon blacks, such as acetylene black and Ketjen black;
(iii) conductive fibers, such as carbon fibers and metal fibers;
(iv) carbon fluoride;
(v) metal powders, such as aluminum;
(vi) conductive whiskers, such as zinc oxide and potassium titanate;
(vii) a conductive metal oxide, such as titanium oxide; and
(viii) a conductive polymer compound, such as polyaniline, polypyrrole, and polythiophene.

From the viewpoint of reducing the cost, the above (i) or (ii) may be used.

Examples of the shape of the battery according to the second embodiment are a coin type, a cylindrical type, a square type, a sheet type, a button type, a flat type, and a stack type.

The battery according to the second embodiment may be manufactured by, for example, providing a material for forming a positive electrode, a material for forming an electrolyte layer, and a material for forming a negative electrode and producing a layered product of a positive electrode, an electrolyte layer, and a negative electrode disposed in this order by a known method.

### EXAMPLES

The present disclosure will now be described in more detail with reference to Examples and Reference Examples.

### <Example 1>

### [Production of solid electrolyte material]

YCl₃, ZrCl₄, and LiCl were provided as raw material powders at a YCl₃ : ZrCl₄ : LiCl molar ratio of about 1 : 1 : 5 in an argon atmosphere having a dew point of less than or equal to -60°C and an oxygen concentration of less than or equal to 0.1 vol% (hereinafter, referred to as "dry argon atmosphere"). These raw material powders were pulverized and mixed in a mortar. The obtained mixture was heat-treated at 550°C for 2 hours in a stainless steel (SUS) airtight container in the dry argon atmosphere and was then pulverized in a mortar. The obtained reaction product was left to stand for about 10 minutes in an atmosphere having a dew point of -30°C and an oxygen concentration of less than or equal to 20.9 vol%. Thus, a solid electrolyte material of Example 1 was obtained.

### [Composition analysis of solid electrolyte material]

The contents of Li and Y per unit weight of the solid electrolyte material of Example 1 were measured using a high-frequency inductively coupled plasma emission spectroscopy apparatus (manufactured by Thermo Fisher Scientific Inc., iCAP 7400) by high-frequency inductively coupled plasma emission spectroscopy. The content of Cl in the solid electrolyte material of Example 1 was measured using an ion chromatography apparatus (manufactured by Dionex Corporation, ICS-2000) by ion chromatography. The Li : Zr : Y : Cl molar ratio was calculated based on the contents of Li, Zr, Y, and Cl obtained by these measurement results. As the result, the solid electrolyte material of Example 1 had a Li : Zr : Y : Cl molar ratio of 4.96 : 0.94 : 1.0 : 11.22.

The mass of O with respect to the mass of the entire solid electrolyte material of Example 1 was measured using an oxygen/nitrogen/hydrogen analyzer (manufactured by HORIBA, Ltd., EMGA-930) by non-dispersive infrared absorbing method. As the result, the mass of O with respect to the mass of the entire solid electrolyte material of Example 1 was 0.19%. Based on this result, the molar ratio of O to Y was calculated. As the result, the molar ratio of O to Y in the solid electrolyte material of Example 1 was 0.07.

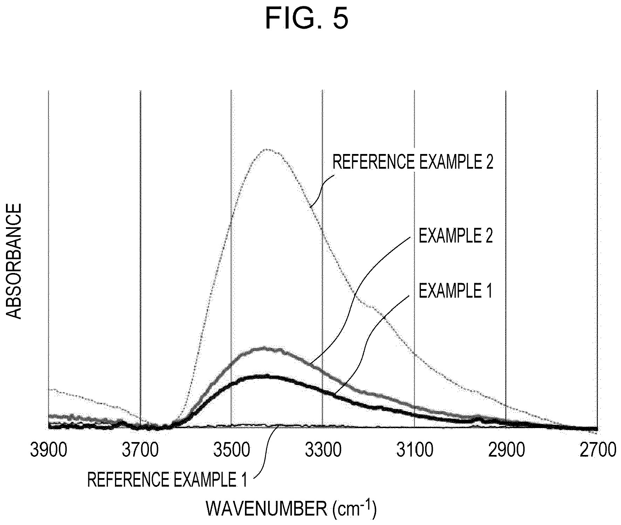

The solid electrolyte material of Example 1 was analyzed by attenuated total reflection using an infrared spectrometer (manufactured by BRUKER, ALPHA). The prism was formed from diamond. As the result, a peak was detected in a range of from 3100 cm⁻¹ to 3640 cm⁻¹, which indicates that a bond of a proton (H⁺) and oxygen is present. The surface region in the present disclosure means the thus-measured region. The surface region of the solid electrolyte material according to the first embodiment was about 1 µm from the surface of the solid electrolyte material to the inner direction. Fig. 5 is a graph showing the infrared absorption spectrum of the solid electrolyte material according to Example 1.

In the composition analysis, an element of which the molar fraction with respect to Y was less than or equal to 0.01% was recognized as an impurity.

### [Measurement of melting point]

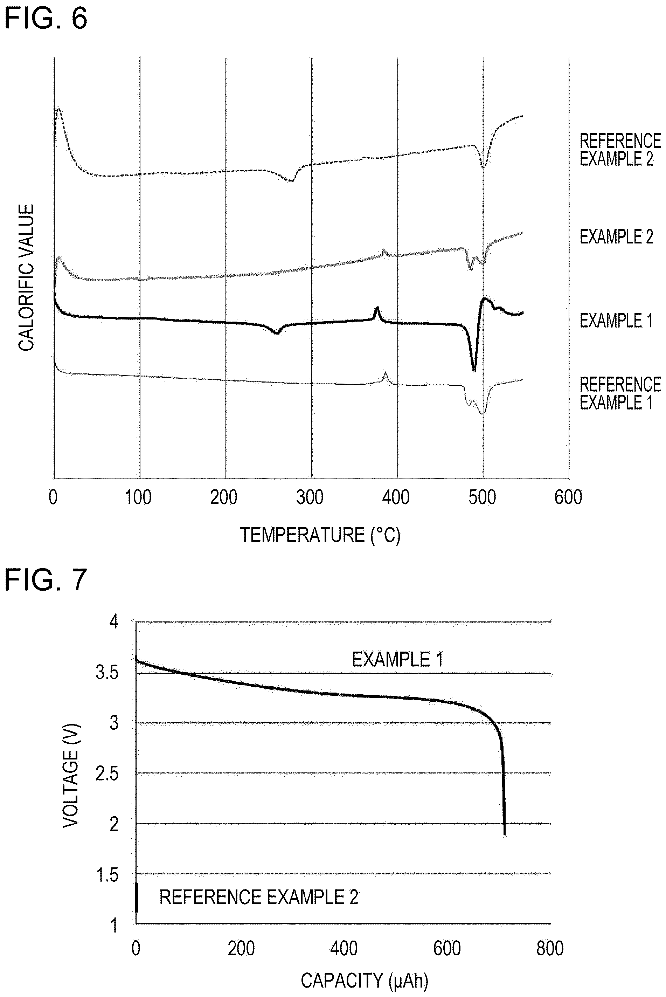

The measurement of melting point used a thermal analyzer (manufactured by T.A. Instruments, Q1000). The solid electrolyte material (about 5 mg) of Example 1 was weighed in a nitrogen atmosphere and was heated at a temperature increase rate of 10 K/min from normal temperature up to 550°C. The endothermal peak was observed at that time. A two-dimensional graph with the horizontal axis representing the temperature and the vertical axis representing the calorific value was produced based on the obtained data. Two points on the graph where the solid electrolyte material was neither exothermic nor endothermic were connected by a straight line, and the line was used as the baseline. Subsequently, the intersection of the tangent at the point of inflection of the endothermal peak and the baseline was defined as the melting point. As the result, the melting point of the solid electrolyte material of Example 1 was 478.4°C. Fig. 6 is a graph showing the results of thermal analysis of the solid electrolyte material of Example 1.

### [X-ray diffraction]

The X-ray diffraction pattern of the solid electrolyte material of Example 1 was measured in a dry environment having a dew point of less than or equal to -45°C with an X-ray diffractometer (RIGAKU Corporation, MiniFlex 600). As the X-ray source, Cu-Kα rays (wavelength: 1.5405 angstrom and 1.5444 angstrom) were used.

As the results of the X-ray diffraction measurement, in the X-ray diffraction pattern of the solid electrolyte material of Example 1, peaks were present at 15.65°, 16.71°, 17.56°, 20.19°, 22.33°, 31.49°, 35.76°, 47.15°, and 49.15°. Fig. 2 is a graph showing the X-ray diffraction pattern of the solid electrolyte material of Example 1.

### [Evaluation of ion conductivity]

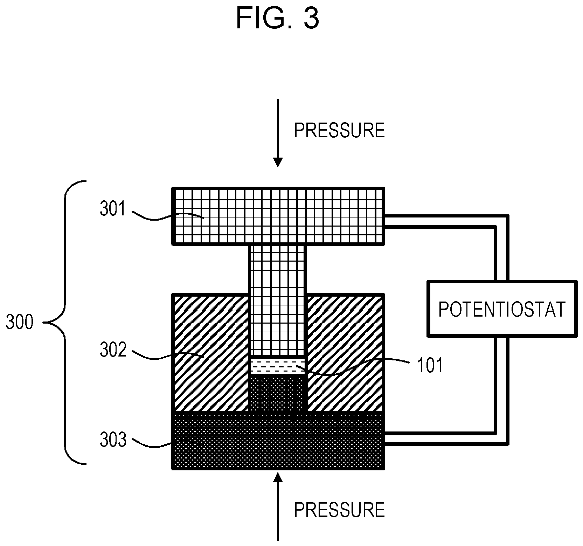

Fig. 3 is a schematic view of a compression molding dies 300 used for evaluating the ion conductivity of a solid electrolyte material.

The compression molding dies 300 included a punch upper part 301, a die 302, and a punch lower part 303. The die 302 was made of insulating polycarbonate. The punch upper part 301 and the punch lower part 303 were both made of electron-conductive stainless steel.

The ion conductivity of the solid electrolyte material of Example 1 was measured using the compression molding dies 300 shown in Fig. 3 by the following method.

The inside of the compression molding dies 300 was filled with the powder 101 of the solid electrolyte material of Example 1 in the dry argon atmosphere. A pressure of 300 MPa was applied to the powder 101 of the solid electrolyte material of Example 1 in the compression molding dies 300 using the punch upper part 301.

While applying the pressure, the impedance of the solid electrolyte material of Example 1 was measured by an electrochemical impedance measurement method at room temperature using a potentiostat (Princeton Applied Research, VersaSTAT4) through the punch upper part 301 and the punch lower part 303. Although it is not shown in the drawing, the punch upper part 301 was connected to a working electrode and a potential measurement terminal, and the punch lower part 303 was connected to a counter electrode and a reference electrode.

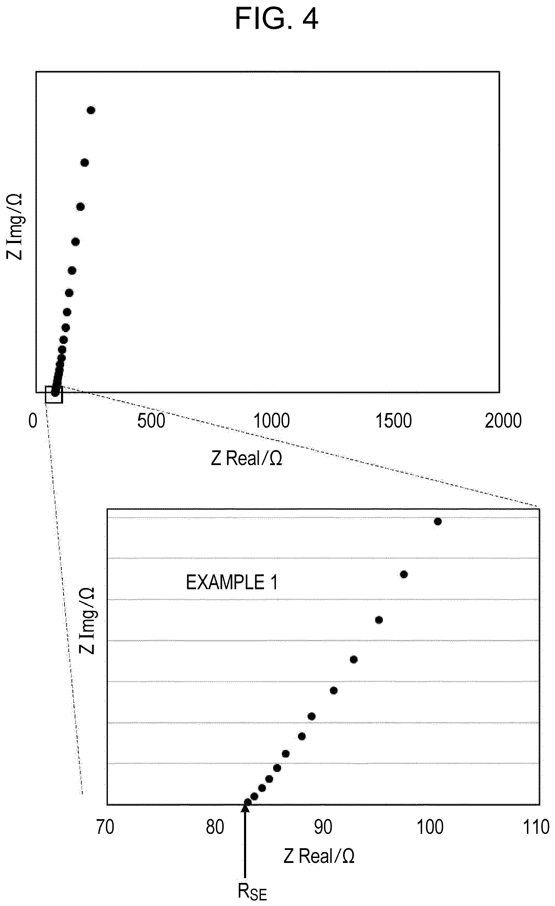

Fig. 4 is a graph showing a cole-cole plot obtained by impedance measurement of the solid electrolyte material of Example 1.

In Fig. 4, the real value of impedance at the measurement point where the absolute value of the phase of complex impedance was the smallest was regarded as the value of resistance for the ion conduction of the solid electrolyte material of Example 1. Regarding the real value, see the arrow R_{SE} shown in Fig. 4. The ion conductivity was calculated using the resistance value based on the following mathematical expression (1): $σ = {\left({R}_{SE}\times S/t\right)}^{- 1}$ (1).

Here, σ represents ion conductivity; S represents the contact area of a solid electrolyte material with the punch upper part 301 (equal to the cross-sectional area of the hollow part of the die 302 in Fig. 3); R_{SE} represents the resistance value of the solid electrolyte material in impedance measurement; and t represents the thickness of the solid electrolyte material applied with a pressure (equal to the thickness of the layer formed from the powder 101 of the solid electrolyte material in Fig. 3).

The ion conductivity of the solid electrolyte material of Example 1 measured at 25°C was 9.4 × 10⁻⁴ S/cm.

### [Production of battery]

The solid electrolyte material of Example 1 and LiCoO₂ as an active material were provided at a volume ratio of 70 : 30 in the dry argon atmosphere. These materials were mixed in an agate mortar. Thus, a mixture was obtained.

The solid electrolyte material (100 mg) of Example 1, the above mixture (10.0 mg), and an aluminum powder (14.7 mg) were stacked in this order in an insulating tube having an inner diameter of 9.5 mm to obtain a layered product. The layered product was applied with a pressure of 300 MPa to form a positive electrode and a solid electrolyte layer. The solid electrolyte layer had a thickness of 500 µm.

Subsequently, metal In foil was stacked on the solid electrolyte layer. The solid electrolyte layer was disposed between the metal In foil and the positive electrode. The metal In foil had a thickness of 200 µm. Subsequently, the metal In foil was applied with a pressure of 80 MPa to form a negative electrode.

A current collector made of stainless steel was attached to the positive electrode and the negative electrode, and a current collecting lead was then attached to the current collector. Finally, the inside of the insulating tube was isolated from the outside atmosphere using an insulating ferrule to seal the inside of the tube. Thus, a battery of Example 1 was obtained.

### [Charge and discharge test]

The battery of Example 1 was placed in a thermostat of 25°C. The battery of Example 1 was charged at a current density of 86 µA/cm² until the voltage reached 3.7 V. The current density corresponds to 0.05 C rate. Subsequently, the battery of Example 1 was similarly discharged at a current density of 86 µA/cm² until the voltage reached 1.9 V.

As the results of the charge and discharge test, the battery of Example 1 had an initial discharge capacity of 710 µAh.

Fig. 7 is a graph showing the initial discharge characteristics of the battery of Example 1.

### <Example 2>

A solid electrolyte material of Example 2 was obtained as in Example 1 except that the time for leaving the reaction product in the atmosphere having a dew point of - 30°C and an oxygen concentration of less than or equal to 20.9 vol% was 60 minutes instead of about 10 minutes.

The element ratio (molar ratio), melting point, infrared absorption spectrum, X-ray diffraction, and ion conductivity of the solid electrolyte material of Example 2 were measured as in Example 1. The measurement results are shown in Tables 1 and 2. Fig. 2 is a graph showing the X-ray diffraction pattern of the solid electrolyte material of Example 2. Fig. 5 is a graph showing the infrared absorption spectrum of the solid electrolyte material according to Example 2. Fig. 6 is a graph showing the results of thermal analysis in Example 2.

The mass of O with respect to the mass of the entire solid electrolyte material of Example 2 was 0.44%.

A battery of Example 2 was obtained as in Example 1 using the solid electrolyte material of Example 2.

The charge and discharge test using the battery of Example 2 was performed as in Example 1. The battery of Example 2 was well charged and discharged as in the battery of Example 1.

### <Reference Example 1>

YCl₃, ZrCl₄, and LiCl were provided as raw material powders at a YCl₃ : ZrCl₄ : LiCl molar ratio of about 1 : 1 : 5 in the dry argon atmosphere. These raw material powders were pulverized and mixed in a mortar. The obtained mixture was heat-treated at 550°C for 2 hours in a stainless steel (SUS) airtight container in the dry argon atmosphere and was then pulverized in a mortar. Thus, a solid electrolyte material of Reference Example 1 was obtained.

### <Reference Example 2>

A solid electrolyte material of Reference Example 2 was obtained as in Example 1 except that the time for leaving the reaction product in the atmosphere having a dew point of -30°C and an oxygen concentration of less than or equal to 20.9 vol% was 90 minutes instead of about 10 minutes.

The element ratio (molar ratio), melting point, infrared absorption spectrum, X-ray diffraction, and ion conductivity of each of the solid electrolyte materials of Reference Examples 1 and 2 were measured as in Example 1. The measurement results are shown in Tables 1 and 2. Fig. 2 is a graph showing the X-ray diffraction patterns of the solid electrolyte materials of Reference Examples 1 and 2. Fig. 5 is a graph showing the infrared absorption spectra of solid electrolyte materials of Reference Examples 1 and 2. Fig. 6 is a graph showing the results of thermal analysis in Reference Examples 1 and 2.

The mass of O with respect to the mass of the entire solid electrolyte material was 0.02% in Reference Example 1 and was 2.62% in Reference Example 2.

A battery of Reference Example 2 was obtained as in Example 1 using the solid electrolyte material of Reference Example 2.

The charge and discharge test using the battery of Reference Example 2 was performed as in Example 1. The battery of Reference Example 2 was neither charged nor discharged. Fig. 7 is a graph showing the initial discharge characteristics of the battery of Reference Example 2.

**[Table 1]**

| | Element ratio (molar ratio) | | | | | Melting point (°C) | Ion conductivity (S/cm) |
|---|---|---|---|---|---|---|---|
| | Li | Zr | Y | Cl | O | | |
| Example 1 | 4.96 | 0.94 | 1.00 | 11.22 | 0.07 | 478.4 | 9.4×10⁻⁴ |
| Example 2 | 4.96 | 0.94 | 1.00 | 11.35 | 0.17 | 479.1 | 3.2×10⁻⁴ |
| Reference Example 1 | 5.00 | 0.94 | 1.00 | 11.34 | 0.01 | 477.1 | 1.2×10⁻³ |
| Reference Example 2 | 5.00 | 0.93 | 1.00 | 11.22 | 1.06 | 492.0 | 3.5×10⁻⁶ |

**[Table 2]**

| | X-ray diffraction peak position (°) | | | | | | | | |
|---|---|---|---|---|---|---|---|---|---|
| Example 1 | 15.65 | 16.71 | 17.56 | 20.19 | 22.33 | 31.49 | 35.76 | 47.15 | 49.15 |
| Example 2 | 15.63 | 16.68 | 17.53 | 20.19 | 22.34 | 31.49 | 35.72 | 47.05 | 49.08 |
| Reference Example 1 | 15.66 | 16.73 | 17.57 | 20.21 | 22.36 | 31.47 | 35.75 | 47.09 | 49.00 |
| Reference Example 2 | 15.64 | 16.70 | 17.54 | 20.20 | 22.35 | 31.47 | 35.74 | 47.10 | 49.05 |

### <Consideration>

As obvious from Table 1, the solid electrolyte materials of Examples 1 and 2 each have a high ion conductivity of greater than or equal to 3 × 10⁻⁴ S/cm at around room temperature. Furthermore, the solid electrolyte materials of Examples 1 and 2 have melting points greater than that of the solid electrolyte material of Reference Example 1. That is, the solid electrolyte materials of Examples have high thermal resistance. The melting point increased with an increase in the molar ratio of O to Y. On the other hand, as obvious from Reference Example 2, an increase in the molar ratio causes a large reduction in the ion conductivity of the solid electrolyte material

It was demonstrated from Fig. 5 that the solid electrolyte materials of Examples 1 and 2 include oxygen binding to a proton. It is inferred that the oxygen is present as a hydroxyl group or hydrated water. It is inferred that when a solid electrolyte material was exposed to an atmosphere having a relatively high due point during the process of manufacturing the solid electrolyte material, the moisture in the atmosphere was incorporated in the solid electrolyte material. It is assumed that a halogen element near the surface of the solid electrolyte material is consequently replaced by a hydroxyl group.

The batteries of Examples 1 and 2 were charged and discharged at 25°C.

Since the solid electrolyte materials of Examples 1 and 2 do not contain sulfur, hydrogen sulfide is not generated.

As described above, the solid electrolyte material according to the present disclosure has a practical lithium-ion conductivity and is suitable for providing a battery that can be well charged and discharged.

### Industrial Applicability

The solid electrolyte material of the present disclosure is used in, for example, an all-solid-state lithium-ion secondary battery.

### Reference Signs List

- 100: solid electrolyte particle
- 101: solid electrolyte material powder
- 201: positive electrode
- 202: electrolyte layer
- 203: negative electrode
- 204: positive electrode active material particle
- 205: negative electrode active material particle
- 300: compression molding dies
- 301: punch upper part
- 302: die
- 303: punch lower part
- 1000: battery

## Claims

1. A solid electrolyte material comprising Li, Zr, Y, Cl, O, and H;
wherein a molar ratio of O to Y is greater than or equal to 0.07 and less than or equal to 0.17; and
wherein
a molar ratio of Li to Y is greater than or equal to 4.96 and less than or equal to 5.00,
a molar ratio of Zr to Y is greater than or equal to 0.93 and less than or equal to 0.94, and
a molar ratio of Cl to Y is greater than or equal to 11.22 and less than or equal to 11.35.

2. The solid electrolyte material according to claim 1, further comprising:
at least one selected from the group consisting of Mg, Ca, Zn, Sr, Ba, Al, Sc, Ga, Bi, La, Sm, Hf, Ta, and Nb.

3. The solid electrolyte material according to claim 1 or claim 2, wherein
a surface region of the solid electrolyte material includes O binding to H.

4. The solid electrolyte material according to any one of claims 1 to 3, wherein
an X-ray diffraction pattern obtained by X-ray diffraction measurement using Cu-Kα includes a peak within each of diffraction angle 2θ ranges of greater than or equal to 15.5° and less than or equal to 15.7°, greater than or equal to 16.6° and less than or equal to 16.8°, greater than or equal to 17.4° and less than or equal to 17.6°, greater than or equal to 20.1° and less than or equal to 20.3°, greater than or equal to 31.4° and less than or equal to 31.6°, greater than or equal to 35.6° and less than or equal to 35.8°, greater than or equal to 47.0° and less than or equal to 47.2°, and greater than or equal to 49.0° and less than or equal to 49.2°.

5. A battery (1000) comprising:
a positive electrode (201);
a negative electrode (203); and
an electrolyte layer (202) disposed between the positive electrode (201) and the negative electrode (201), wherein
at least one selected from the group consisting of the positive electrode (201), the negative electrode (203), and the electrolyte layer (202) contains the solid electrolyte material according to any one of claims 1 to 4.

## Patentansprüche

1. Festelektrolytmaterial, umfassend Li, Zr, Y, Cl, O und H;
wobei ein Molverhältnis von O zu Y größer oder gleich 0,07 und kleiner oder gleich 0,17 ist; und
wobei:
ein Molverhältnis von Li zu Y größer oder gleich 4,96 und kleiner oder gleich 5,00 ist,
ein Molverhältnis von Zr zu Y größer oder gleich 0,93 und kleiner oder gleich 0,94 ist, und
ein Molverhältnis von Cl zu Y größer oder gleich 11,22 und kleiner oder gleich 11,35 ist.

2. Festelektrolytmaterial gemäß Anspruch 1, welches ferner mindestens ein Element ausgewählt aus der Gruppe bestehend aus Mg, Ca, Zn, Sr, Ba, Al, Sc, Ga, Bi, La, Sm, Hf, Ta und Nb umfasst.

3. Festelektrolytmaterial gemäß Anspruch 1 oder Anspruch 2, wobei ein Oberflächenbereich des Festelektrolytmaterials an H gebundenes O aufweist.

4. Festelektrolytmaterial gemäß einem der Ansprüche 1 bis 3, wobei
ein mittels Röntgenbeugungsmessung unter Verwendung von Cu-Kα erhaltenes Röntgenbeugungsmuster einen Peak innerhalb jedes der folgenden Beugungswinkelbereiche (2θ) aufweist: größer oder gleich 15,5° und kleiner oder gleich 15,7°, größer oder gleich 16,6° und kleiner oder gleich 16,8°, größer oder gleich 17,4° und kleiner oder gleich 17,6°, größer oder gleich 20,1° und kleiner oder gleich 20,3°, größer oder gleich 31,4° und kleiner oder gleich 31,6°, größer oder gleich 35,6° und kleiner oder gleich 35,8°, größer oder gleich 47,0° und kleiner oder gleich 47,2° sowie größer oder gleich 49,0° und kleiner oder gleich 49,2°.

5. Batterie (1000), umfassend:
eine positive Elektrode (201);
eine negative Elektrode (203); und
eine Elektrolytschicht (202), die zwischen der positiven Elektrode (201) und der negativen Elektrode (201) angeordnet ist,
wobei mindestens eines aus der Gruppe bestehend aus der positiven Elektrode (201), der negativen Elektrode (203) und der Elektrolytschicht (202) das Festelektrolytmaterial gemäß einem der Ansprüche 1 bis 4 enthält.

## Revendications

1. Matériau d'électrolyte solide comprenant du Li, du Zr, du Y, du CI, de l'O et de l'H;
dans lequel le rapport molaire de O à Y est supérieur ou égal à 0,07 et inférieur ou égal à 0,17; et
dans lequel
le rapport molaire de Li à Y est supérieur ou égal à 4,96 et inférieur ou égal à 5,00,
le rapport molaire de Zr à Y est supérieur ou égal à 0,93 et inférieur ou égal à 0,94, et le rapport molaire de CI à Y est supérieur ou égal à 11,22 et inférieur ou égal à 11,35.

2. Matériau d'électrolyte solide selon la revendication 1, comprenant en outre:
au moins un élément choisi parmi le groupe constitué de Mg, Ca, Zn, Sr, Ba, AI, Sc, Ga, Bi, La, Sm, Hf, Ta et Nb.

3. Matériau d'électrolyte solide selon la revendication 1 ou la revendication 2, dans lequel
une zone superficielle du Matériau d'électrolyte solide comprend de l'O lié à H.

4. Matériau d'électrolyte solide selon l'une quelconque des revendications 1 à 3, dans lequel
un diagramme de diffraction des rayons X obtenu par mesure de diffraction des rayons X utilisant le rayonnement Cu-Ka comprend un pic dans chacune des plages d'angles de diffraction 20 comprises entre 15,5° et 15,7° inclus, entre 16,6° et 16,8° inclus, supérieur ou égal à 17,4° et inférieur ou égal à 17,6°, supérieur ou égal à 20,1° et inférieur ou égal à 20,3°, supérieur ou égal à 31,4° et inférieur ou égal à 31,6°, supérieur ou égal à 35,6° et inférieur ou égal à 35,8°, supérieure ou égale à 47,0° et inférieure ou égale à 47,2°, et supérieure ou égale à 49,0° et inférieure ou égale à 49,2°.

5. Batterie (1000) comprenant:
une électrode positive (201);
une électrode négative (203); et
une couche d'électrolyte (202) disposée entre l'électrode positive (201) et l'électrode négative (203), dans laquelle
au moins un élément choisi parmi le groupe constitué de l'électrode positive (201), de l'électrode négative (203) et de la couche d'électrolyte (202) contient le matériau d'électrolyte solide selon l'une quelconque des revendications 1 à 4.
